(19) Europäisches Patentamt
European Patent Office
Office européen des brevets

(11) **EP 2 383 148 B1**

(12) **EUROPÄISCHE PATENTSCHRIFT**

(45) Veröffentlichungstag und Bekanntmachung des Hinweises auf die Patenterteilung:
**12.03.2014 Patentblatt 2014/11**

(51) Int Cl.:
***B60R 1/06*** *(2006.01)*

(21) Anmeldenummer: **11161149.7**

(22) Anmeldetag: **05.04.2011**

(54) **Montagesystem zur verwechslungssicheren Montage von Kraftfahrzeugaußenspiegeln**

Mounting system for confusion-proof mounting of automotive exterior rear view mirrors

Système de montage pour le montage protégé contre l'échange de rétroviseurs extérieurs de véhicules automobiles

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.04.2010 DE 102010028451**

(43) Veröffentlichungstag der Anmeldung:
**02.11.2011 Patentblatt 2011/44**

(73) Patentinhaber: **MEKRA Lang GmbH & Co. KG 90765 Fürth (DE)**

(72) Erfinder:
• **Heger, Sebastian**
**91438 Bad Windsheim (DE)**
• **Dr. Lang, Werner**
**91465 Ergersheim (DE)**

(74) Vertreter: **Winter, Brandl, Fürniss, Hübner, Röss, Kaiser, Polte - Partnerschaft Patent- und Rechtsanwaltskanzlei Alois-Steinecker-Strasse 22 85354 Freising (DE)**

(56) Entgegenhaltungen:
**EP-A2- 1 531 084       WO-A1-02/14923**
**WO-A1-2010/045989   DE-U1- 29 504 245**
**US-B1- 6 692 131**

**Beschreibung**

Die vorliegende Erfindung betrifft ein Montagesystem zur Montage von Spiegelköpfen zur Bereitstellung von rechten und linken Kraftfahrzeugaußenspiegeln, Halteeinrichtungen für rechte und linke Kraftfahrzeugaußenspiegel von Linkslenker- bzw. Rechtslenkerfahrzeugen und einen Kraftfahrzeugaußenspiegel für Nutzfahrzeuge.

Für einen umfassenden Überblick über den rückwärtigen Verkehr werden an Kraftfahrzeugen in der Regel sowohl auf der rechten Seite als auch der linken Seite Außenspiegel vorgesehen. Dazu wird auf jeder Seite des Kraftfahrzeugs ein Spiegelkopf, der eine Spiegelscheibe umfasst, mittels geeigneter Montagesysteme an dem Kraftfahrzeug montiert. Damit der Kraftfahrzeugaußenspiegel den unterschiedlichen Sitzpositionen der Fahrer angepasst werden kann ist der Spiegelkopf oder die Spiegelscheibe verschwenkbar gelagert. Um sowohl bei rechtsgelenkten als auch bei linksgelenkten Kraftfahrzeugen eine ausreichende Verstellbarkeit der Kraftfahrzeugaußenspiegel zu gewährleisten werden diese bei einem rechtsgelenkten Fahrzeug in einer anderen Grundstellungen montiert als bei einem linksgelenkten Fahrzeug.

Eine einfache Lösung zur Bereitstellung einer ausreichenden Verstellbarkeit von Kraftfahrzeugaußenspiegeln ist die Verwendung von rohrförmigen Haltearmen, an denen die Spiegelköpfe so montiert werden können, dass diese in einem großen Bereich um das Halterohr verschwenkbar sind. Dadurch sind die Gestaltungsmöglichkeiten jedoch stark eingeschränkt und es sind alternative Montagesysteme gesucht, wenn aufgrund von Designvorgaben keine rohrförmigen Haltearme zu verwenden ist.

Aus wirtschaftlicher Sicht ist ferner gefordert, dass eine möglichst geringe Anzahl an unterschiedlichen Bauteilen herzustellen und für die Montage bereitzuhalten ist.

So werden bei rechtsgelenkten und linksgelenkten Kraftfahrzeugen bevorzugt identische Haltearme und Spiegelköpfe verwendet. Derartige Haltearme weisen in der Regel eine oder mehrere Montageflächen auf, an denen die Spiegelköpfe montiert werden können. Um nun unterschiedliche Grundstellungen für rechtsgelenkte und linksgelenkte Fahrzeuge bereitzustellen, werden lediglich keilförmige Winkelplatten zwischen den Montageflächen und den Spiegelköpfen angeordnet.

Diese Winkelplatten lassen sich derart beschreiben, dass sie jeweils eine Vorderseite, eine Rückseite eine schmale Randseite und eine gegenüberliegend angeordnete breite Randseite umfassen, dass sie mittels ihrer Rückseiten an den Montageflächen der rechten und linken Haltearme montierbar sind und dass an deren Vorderseiten die Spiegelköpfe montierbar sind.

Bei einem derartigen Montagesystem können somit auf relativ einfache Weise der rechte und linke Spiegelkopf in der gewünschten Grundstellung montiert werden. Das heißt, bei einem linksgelenkten Kraftfahrzeug derart, dass eine optimale Beobachtung des rückwärtigen Verkehrs vom linken Vordersitz aus möglich ist, bzw. bei einem rechtsgelenkten Kraftfahrzeug derart, dass eine optimale Beobachtung des rückwärtigen Verkehrs vom rechten Vordersitz aus möglich ist.

Ein diesbezügliches System wird in der DE 295 04 245 U1 beschrieben. Dieses besteht aus einem Spiegelfuß und einem daran zu befestigenden Spiegelgehäuse, wobei zwischen Spiegelfuß und Spiegelgehäuse ein keilförmiges Adapterteil montierbar ist. Je nach Ausführungsform kann entweder auf nur einer Seite ein keilförmiges Adapterteil, dessen Keilwinkel dem Anstellwinkelunterschied der Außenspiegel auf den beiden Seiten des Kraftfahrzeugs entspricht, montiert werden oder können auf beiden Seiten identische Adapterteile mit halben Keilwinkeln, dafür aber in entgegengesetzter Ausrichtung montiert werden, um denselben Anstellwinkelunterschied der Außenspiegel auf den beiden Seiten des Kraftfahrzeugs zu erhalten.

Bei dem beschriebenen Montagesystem besteht jedoch die Gefahr, dass bei der Montage der Spiegelköpfe die Winkelplatten auf der falschen Seite und/oder in falscher Ausrichtung montiert werden. Darüber hinaus besteht die Gefahr, dass falsche Winkelplatten verwendet werden, wenn für unterschiedliche Fahrzeuge oder Spiegelköpfe unterschiedliche Winkelplatten bereitgehalten werden.

Ein alternatives System wird in der EP 1 531 084 A2 offenbart. Dort wird ein Tragarm für einen Fahrzeugspiegel beschrieben, bei dem auf einer Tragplatte ein Steg mit einem ausbrechbaren Positionskeil ausgebildet ist. Je nachdem auf welcher Seite des Fahrzeugs der Tragarm montiert wird und auf welcher Seite das Fahrzeug gelenkt wird, ist dieser Positionskeil vor der Montage des Spiegelkopfes herauszubrechen oder nicht. Somit können ein Tragarm und ein Spiegelkopf bereitgestellt werden, die für alle Montagevarianten geeignet sind.

Dieses System verringert zwar die Anzahl an bereitzuhaltenden Komponenten zur Montage eines Kraftfahrzeugaußenspiegels, jedoch wird eine falsche Montage nicht in ausreichendem Maße verhindert. So muss die Person, welche die Montage des Tragarms durchführt, bei jeder Montage entscheiden, ob der Positionskeil herausgebrochen werden muss oder nicht, so dass ein versehentliches Herausbrechen des Positionskeils oder ein Vergessen des Herausbrechens zu einer falschen Ausrichtung des Spiegelkopfes führt.

Die WO 02/14923 A zeigt ein Montagesystem und eine Halteinrichtung jeweils noch den Oberbegriffe der Ansprüche 1 und 2-5.

Es ist daher die Aufgabe der vorliegenden Erfindung, ein Montagesystem zur Montage von Spiegelköpfen bereitzustellen, mit dem rechte und linke Kraftfahrzeugaußenspiegel für sowohl rechtsgelenkte als auch linksgelenkte Fahrzeuge bereitgestellt werden können und bei dem eine falsche Montage der Spiegelköpfe weitgehend vermieden werden kann.

Vorrichtungstechnisch wird diese Aufgabe gelöst durch das Montagesystem gemäß Anspruch 1, bzw. die Halteinrichtungen für rechte und linke Kraftfahrzeugaußenspiegel von Linkslenker- bzw. Rechtslenkerfahrzeugen gemäß den Ansprüchen 2 bis 5 und durch einen Kraftfahrzeugaußenspiegel für Nutzfahrzeuge gemäß Anspruch 12.

Gegenstand der vorliegenden Erfindung ist somit zum einen ein Montagesystem zur Montage von Spiegelköpfen zur Bereitstellung von rechten und linken Kraftfahrzeugaußenspiegeln gemäß der vorliegenden Erfindung mit

einem rechten Haltearm und einem linken Haltearm, die jeweils wenigstens eine Montagefläche umfassen,

wenigstens zwei identischen Linkslenkerwinkelplatten und/oder wenigstens zwei identischen Rechtslenkerwinkelplatten, die jeweils eine Vorderseite, eine Rückseite eine schmale Randseite und eine gegenüberliegend angeordnete breite Randseite umfassen und mittels ihren Rückseiten an den Montageflächen der beiden Haltearme montierbar sind und an deren Vorderseiten die Spiegelköpfe montierbar sind,

wobei jede Linkslenkerwinkelplatte eine Linkslenkerkodierung in Form von wenigstens einem Linkslenkerformelement aufweist, das bei Montage an der Montagefläche in wenigstens ein komplementäres erstes Formelement auf der Montagefläche eingreift, und die Linkslenkerkodierung eine Montage der Linkslenkerwinkelplatte an den Montageflächen des rechten und linken Haltearms in nur einer Linkslenkerorientierung ermöglicht,

bzw. jede Rechtslenkerwinkelplatte eine Rechtslenkerkodierung in Form von wenigstens einem Rechtslenkerformelement aufweist, das bei Montage an der Montagefläche in wenigstes ein komplementäres zweites Formelement auf der Montagefläche eingreift, und die Rechtslenkerkodierung eine Montage der Rechtslenkerwinkelplatte an den Montageflächen des rechten und linken Haltearms in nur einer Rechtslenkerorientierung ermöglicht.

Mit dem erfindungsgemäßen Montagesystem wird die Gefahr einer falschen Montage zum einen dadurch verringert, dass für die Montage der rechten und linken Spiegelköpfe identische Winkelplatten verwendet werden. Eine Verwechslung rechter und linker Winkelplatten scheidet damit aus. Darüber hinaus sind durch die Anordnung der Formelemente und der dazu komplementären Formelemente an den Winkelplatten bzw. Montageflächen der Haltearme die Winkelplatten so kodiert, dass diese immer nur in einer Orientierung bzw. Ausrichtung montiert werden können.

Somit umfasst das erfindungsgemäße Montagesystem nur zwei Arten an Winkelplatten, eine für rechtsgelenkte Fahrzeuge und eine für linksgelenkte Fahrzeuge. Werden Haltearme für linksgelenkte Kraftfahrzeuge montiert, so müssen neben den rechten und linken Haltearmen zusätzlich lediglich die zugehörigen Linkslenkerwinkelplatten bereitgestellt werden. Damit ist eine eindeutige und verwechslungssichere Montage sichergestellt.

Wird auf die Montage von Haltearmen für rechtsgelenkte Kraftfahrzeuge umgestellt, so sind lediglich die Linkslenkerwinkelplatten durch Rechtslenkerwinkelplatten auszutauschen. Alle anderen Bauteile und Komponenten können weiter verwendet werden.

Das erfindungsgemäße Montagesystem enthält einen rechten und einen linken Haltearm und wenigstens zwei identischen Linkslenkerwinkelplatten und/oder wenigstens zwei identischen Rechtslenkerwinkelplatten. Jeder der beiden Haltearme kann dabei über mehr als eine Montagefläche verfügen, was vor allem dann angebracht ist, wenn entweder ein relativ großer Spiegelkopf oder mehr als ein Spiegelkopf an einem Haltearm zu montieren sind. Demgemäß wird eine derartige Ausführungsform des erfindungsgemäßen Montagesystems auch über mehr als zwei identische Linkslenkerwinkelplatten und/oder Rechtslenkerwinkelplatten verfügen.

Bevorzugt verfügt das erfindungsgemäße Montagesystem zur Montage von Spiegelköpfen neben den beiden Haltearmen über Rechtslenkerwinkelplatten und Linkslenkerwinkelplatten, so dass das System dazu geeignet ist rechte und linke Kraftfahrzeugaußenspiegel an rechtsgelenkte Fahrzeuge oder auch an linksgelenkte Fahrzeuge zu montieren.

In einer speziellen Ausführungsform ist das erfindungsgemäße Montagesystem zur Montage von Spiegelköpfen an nur linksgelenkten Fahrzeugen oder nur rechtsgelenkten Fahrzeugen ausgelegt und umfasst somit neben den beiden Haltearmen nur Linkslenkerwinkelplatten bzw. nur Rechtslenkerwinkelplatten.

Die Kennzeichnung einer Seite eines Kraftfahrzeugs bzw. der Lage bestimmter Anbauteile für das Kraftfahrzeug, wie der Haltearme des erfindungsgemäßen Montagesystems, durch die Begriffe "rechts" und "links" sind in der vorliegenden Anmeldung so zu verstehen, dass sie aus Sicht des Fahrers und somit in Fahrtrichtung definiert sind.

Gegenstand der vorliegenden Erfindung sind ferner Halteeinrichtungen für einen linken bzw. rechten Kraftfahrzeugaußenspiegel für ein Linkslenkerfahrzeug bzw. ein Rechtslenkerfahrzeug.

Im Einzelnen sind dies:

Eine Halteeinrichtung für einen linken Kraftfahrzeugaußenspiegel eines Linkslenkerfahrzeuges gemäß der vorliegenden Erfindung mit
einem linken Haltearm, der wenigstens eine Montagefläche umfasst, wenigstens einer Linkslenkerwinkelplatte, die eine Vorderseite, eine Rückseite eine schmale Randseite und eine gegenüberliegend angeordnete breite Randseite umfasst und mittels ihrer Rückseite an der Montagefläche des Haltearms montiert ist und an deren Vorderseite ein Spiegelkopf montierbar ist,
dadurch gekennzeichnet, dass
die Linkslenkerwinkelplatte eine Linkslenkerkodierung in Form von wenigstens einem Linkslenkerformelement aufweist, das in wenigstens ein komplementäres Formelement auf der Montagefläche eingreift, und die Linkslenkerkodierung eine Montage der Linkslenkerwinkelplatte an der Montagefläche des linken Haltearms in nur einer Linkslenkerorientierung ermöglicht.

Eine Halteinrichtung für einen rechten Kraftfahrzeugaußenspiegel eines Linkslenkerfahrzeuges gemäß der vorliegenden Erfindung mit
einem rechten Haltearm, der wenigstens eine Montagefläche umfasst,
wenigstens einer Linkslenkerwinkelplatte, die eine Vorderseite, eine Rückseite eine schmale Randseite und eine gegenüberliegend angeordnete breite Randseite umfasst und mittels ihrer Rückseite an der Montagefläche des rechten Haltearms montiert ist und an deren Vorderseite ein Spiegelkopf montierbar ist,
dadurch gekennzeichnet, dass
die Linkslenkerwinkelplatte eine Linkslenkerkodierung in Form von wenigstens einem Linkslenkerformelement aufweist, das in wenigstens ein komplementäres Formelement auf der Montagefläche eingreift, und die Linkslenkerkodierung eine Montage der Linkslenkerwinkelplatte an der Montagefläche des rechten Haltearms in nur einer Linkslenkerorientierung ermöglicht.

Eine Halteinrichtung für einen linken Kraftfahrzeugaußenspiegel eines Rechtslenkerfahrzeuges gemäß der vorliegenden Erfindung mit
einem linken Haltearm, der wenigstens eine Montagefläche umfasst,
wenigstens einer Rechtslenkerwinkelplatte, die eine Vorderseite, eine Rückseite eine schmale Randseite und eine gegenüberliegend angeordnete breite Randseite umfasst und mittels ihrer Rückseite an der Montagefläche des linken Haltearms montiert ist und an deren Vorderseite ein Spiegelkopf montierbar ist,
dadurch gekennzeichnet, dass
die Rechtslenkerwinkelplatte eine Rechtslenkerkodierung mit wenigstens einem Rechtslenkerformelement aufweist, das in wenigstens ein komplementäres Formelement an der Montagefläche eingreift, und die Rechtslenkerkodierung eine Montage der Rechtslenkerwinkelplatte an der Montagefläche des linken Haltearms in nur einer Rechtslenkerorientierung ermöglicht.

Eine Halteinrichtung für einen rechten Kraftfahrzeugaußenspiegel eines Rechtslenkerfahrzeuges gemäß der vorliegenden Erfindung mit
einem rechten Haltearm, der wenigstens eine Montagefläche umfasst,
wenigstens einer Rechtslenkerwinkelplatte, die eine Vorderseite, eine Rückseite eine schmale Randseite und eine gegenüberliegend angeordnete breite Randseite umfasst und mittels ihrer Rückseite an der Montagefläche des rechten Haltearms montiert ist und an deren Vorderseite ein Spiegelkopf montierbar ist,
dadurch gekennzeichnet, dass
die Rechtslenkerwinkelplatte eine Rechtslenkerkodierung mit wenigstens einem Rechtslenkerformelement aufweist, das in wenigstens ein komplementäres Formelement auf der Montagefläche eingreift, und die Rechtslenkerkodierung eine Montage der Rechtslenkerwinkelplatte an der Montagefläche des rechten Haltearms in nur einer Rechtslenkerorientierung ermöglicht.

In diesen erfindungsgemäßen Halteeinrichtungen ist dasselbe wie oben für das Montagesystem beschriebene Prinzip der vorliegenden Erfindung verwirklicht.

Der Unterschied bei einer Montage von Spiegelköpfen für ein rechtsgelenktes Fahrzeug und ein linksgelenktes Fahrzeug ergibt sich dadurch, dass die Spiegelköpfe bereits in ihrer Grundstellung unterschiedliche Ausrichtungen aufweisen müssen. In der Grundstellung der Außenspiegel sollte eine optimale Beobachtung des rückwärtigen Verkehrs von der Position aus ermöglicht werden an der sich der Fahrer des Fahrzeugs befindet. Bei einem rechtsgelenkten Fahrzeug ist dies der in Fahrtrichtung gesehen rechten Vordersitz und bei einem linksgelenkten Fahrzeug ist dies der in Fahrtrichtung gesehen linken Vordersitz.

Wenn man davon ausgeht, das bei einer Montage der Spiegelköpfe ohne Winkelplatten die Grundstellung sich auf beispielsweise einen Punkt in der Mitte des Fahrzeugs und in Höhe der Vordersitze bezieht, dann beinhaltet eine Einstellung der Grundstellung des rechten und linken Spiegelkopfs für ein rechtsgelenktes oder linksgelenktes Fahrzeug immer eine Verschwenkung der beiden Spiegelköpfe in dieselbe Richtung. Demgemäß sind bei einem linksgelenkten Fahrzeug die Winkelplatten derart auf den Montageflächen der Haltearme zu montieren, dass die darauf zu montierenden Spiegelköpfe in dieselbe Richtung, d. h. nach links, verschwenkt sind. Entsprechend sind bei einem rechtsgelenkten Fahrzeug die Winkelplatten derart auf den Montageflächen der Haltearme zu montieren, dass die darauf zu montierenden Spiegelköpfe beide nach rechts verschwenkt sind.

Bei dem erfindungsgemäßen Montagesystem oder der erfindungsgemäßen Halteeinrichtung kann die Linkslenkerorientierung der Linkslenkerwinkelplatte somit derart beschrieben werden, dass ausgehend davon, dass die Haltearme, jeweils eine dem Fahrzeug zugewandte Innenseite und eine von dem Fahrzeug abgewandte Außenseite aufweisen, wobei die wenigstens eine Montagefläche zwischen Innen- und Außenseite angeordnet ist, die Linkslenkerorientierung der Linkslenkerwinkelplatte bei deren Montage an einem rechten Haltearm derart ist, dass die breite Randseite der Linkslenkerwinkelplatte der Außenseite des rechten Haltearms zugewandt ist, und dass die Linkslenkerorientierung der Linkslenkerwinkelplatte bei deren Montage an einem linken Haltearm derart ist, dass die breite Randseite der Innenseite des linken Haltearms zugewandt ist.

Gleichermaßen kann die Rechtslenkerorientierung der Rechtslenkerwinkelplatte bei deren Montage an einem rechten Haltearm derart beschrieben werden, dass die schmale Randseite der Rechtslenkerwinkelplatte der Außenseite des rechten Haltearms zugewandt ist, und dass die Rechtslenkerorientierung der Rechtslenkerwinkelplatte bei deren Montage an einem linken Haltearm derart ist, dass die schmale Randseite der Innenseite des linken Haltearms zugewandt ist.

Alternativ kann bei dem erfindungsgemäßen Montagesystem oder der erfindungsgemäßen Halteeinrichtung die zum Erreichen der oben genannten gleichgerichteten Verschwenkung erforderliche Orientierung der Winkelplatten bei der Montage auf den Montageflächen der Haltearme derart beschrieben werden, dass bei einer in Bezug auf die hinsichtlich der Montage am Kraftfahrzeug beabsichtigte Ausrichtung der Haltearme die Vorderseitenflächen der Winkelplatten gegenüber den Montageflächen der Haltearme um eine senkrechte Hochachse, die zur z-Achse des Fahrzeugs parallel ist, verdreht ausgerichtet sind, wobei bei der Linkslenkerorientierung die Vorderseitenflächen der Linkslenkerwinkelplatten negativ um die senkrechte Hochachse verdreht sind, und bei der Rechtslenkerorientierung die Vorderseitenflächen der Rechtslenkerwinkelplatten positiv um die senkrechte Hochachse verdreht sind. Die zur z-Achse des Fahrzeugs parallele Hochachse verläuft beispielsweise entlang der schmalen Randseite der jeweiligen Winkelplatte.

Zur genauen Kennzeichnung der Bauteile von Fahrzeugen wird als ein Fahrzeugkoordinatensystem in der Regel ein dreidimensionales, rechtshändiges Koordinatensystem verwendet. Der Nullpunkt dieses Koordinatensystems befindet sich bei Kraftfahrzeugen in der Mitte einer gedachten Linie zwischen den Mittelpunkten der Vorderräder. Die x-Achse zeigt entgegen der Fahrtrichtung des Fahrzeugs, die z-Achse nach oben und die y-Achse nach rechts.

Bei dem erfindungsgemäßen Montagesystem oder den erfindungsgemäßen Halteeinrichtungen können ferner die Linkslenkerwinkelplatten und Rechtslenkerwinkelplatten eine Mehrzahl an Linkslenkerformelementen bzw. Rechtslenkerformelementen und demgemäß die Montageflächen der rechten und linken Haltearme eine Mehrzahl an komplementären ersten und zweiten Formelementen aufweisen.

Dadurch kann die Verwechslungssicherheit weiter erhöht werden. So wird bei mehreren Formelementen auf den Montageflächen zum einen die Verwechslungssicherheit innerhalb eines Montagesystems erhöht und können darüber hinaus die Winkelplatten für mehrere unterschiedliche Montagesysteme kodiert werden.

Bei der Verwendung von mehr als einem Linkslenkerformelement bzw. Rechtslenkerformelement auf den Winkelplatten können diese auch so angeordnet werden, dass eines der komplementären Formelemente auf den Montageflächen der Haltearme zu sowohl einem der Linkslenkerformelemente als auch einem der Rechtslenkerformelemente komplementär ist. Ein derartiges Formelement übernimmt damit sowohl die Funktion eines komplementären ersten Formelements als auch die Funktion eines komplementären zweiten Formelements.

Bei dem erfindungsgemäßen Montagesystem oder den erfindungsgemäßen Halteeinrichtungen können die Rechtslenkerformelemente bzw. Linkslenkerformelemente beispielsweise durch Stege und/oder Nuten und die komplementären ersten bzw. zweiten Formelemente durch Nuten und/oder Stege ausgebildet sein. Alternativ können die Rechtslenkerformelemente bzw. Linkslenkerformelemente durch kreisförmige Zapfen und die komplementären ersten bzw. zweiten Formelemente durch kreisförmige Bohrungen ausgebildet sein, wobei Zapfen und Bohrungen natürlich auch vertauscht angeordnet werden können.

Es sind prinzipiell auch andere Formelemente möglich und von der vorliegenden Erfindung umfasst insofern eine verwechslungssichere Kodierung der Winkelplatten erreicht wird.

In einer speziellen Ausführungsform des erfindungsgemäßen Montagesystems bzw. der erfindungsgemäßen Halteeinrichtungen sind der linke und der rechte Haltearm spiegelsymmetrisch zueinander.

In einer weiteren speziellen Ausführungsform des erfindungsgemäßen Montagesystems bzw. der erfindungsgemäßen Halteeinrichtungen weisen die Winkelplatten durchgehende Bohrungen für die Montage der Spiegelköpfe an den Haltearmen auf und sind diese Bohrungen symmetrisch angeordnet. Durch die symmetrische Anordnung der durchgehenden Bohrungen lassen sich sowohl der rechte Spiegelkopf als auch der linke Spiegelkopf unter Zwischenschaltung der gleichen Winkelplatte auf den jeweiligen Träger montieren.

Bei dieser Ausführungsform müssen vor der Montage der Spiegelköpfe die Winkelplatten nicht vorab an den Haltearmen montiert werden sondern können die Spiegelköpfe direkt mit den Haltearmen verschraubt werden, wobei die Schrauben für die Befestigung der Spiegelköpfe durch die Bohrungen der Winkelplatten geführt werden.

Gegenstand der vorliegenden Erfindung ist schließlich auch ein Kraftfahrzeugaußenspiegel für Nutzfahrzeuge, der eine der oben beschriebenen Halteeinrichtungen umfasst mit wenigstens einem an der Halteeinrichtung montierten Spiegelkopf.

Weitere Vorteile und Merkmale der vorliegenden Erfindung ergeben sich aufgrund der Beschreibung von Ausführungsbeispielen sowie anhand der Zeichnungen.

Es zeigt:

Fig. 1 eine perspektivische Darstellung eines Montagesystems gemäß der vorliegenden Erfindung,

Fig. 2 eine vergrößerte Darstellung der Winkelplatten aus Fig. 1,

Fig. 3 eine perspektivische Darstellung eines Montagesystems gemäß der vorliegenden Erfindung mit an den Haltearmen montierten Spiegelköpfen,

Fig. 4 eine perspektivische Darstellung einer weiteren Ausführungsform des erfindungsgemäßen Montagesystems, und

Fig. 5a und Fig. 5b schematische Skizzen zur Erläuterung der Einstellung der gewünschten Anstellwinkel für Fahrer- und Beifahrerspiegel unter Verwendung von Winkelplatten.

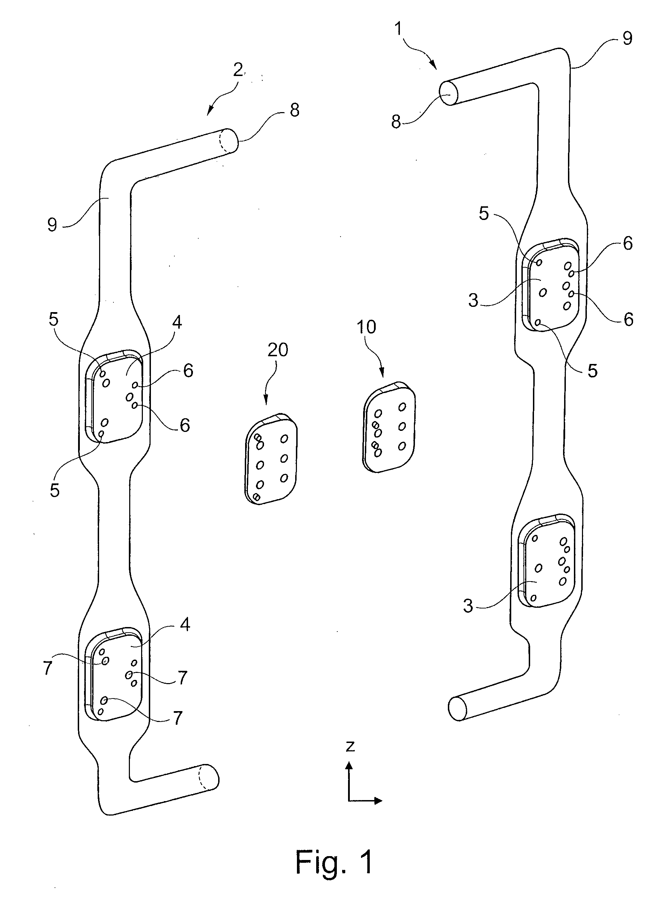

In Fig. 1 ist beispielhaft eine Ausführungsform eines Montagesystems gemäß der vorliegenden Erfindung dargestellt. Dieses besteht aus einem rechten Haltearm (1) und einem linken Haltearm (2) mit jeweils zwei Montageflächen (3, 4) und aus jeweils zwei Rechtslenkerwinkelplatten (10) und zwei Linkslenkerwinkelplatten (20), wobei der Einfachheit halber in Fig. 1 jeweils nur eine Rechtslenkerwinkelplatt (10) und eine Linkslenkerwinkelplatte (20) abgebildet sind.

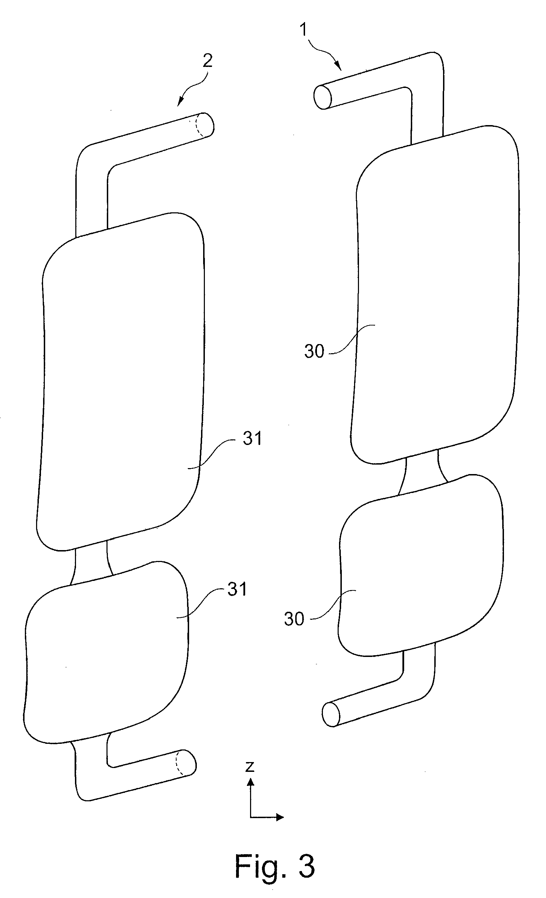

Da jeder der beiden Haltearme mit jeweils zwei Winkelplatten versehen ist, ist die Montage von entweder einem großen Spiegelkopf oder zwei separaten Spiegelköpfen möglich. Die Variante mit zwei Spiegelköpfen an einem Haltearm ist in Fig. 3 dargestellt.

Die Montageflächen des rechten Haltearms (3) und die Montageflächen des linken Haltearms (4) weisen jeweils die zu den Linkslenkerformelementen kompatibeln ersten Formelemente (5), die zu den Rechtslenkerformelementen komplementären zweiten Formelemente (6) und die für die Montage der Spiegelköpfe vorgesehenen Bohrungen (7) auf. In der vorliegenden Ausführungsform sind die komplementären Formelemente (5, 6) als runde Bohrungen ausgebildet. Die entsprechenden Linkslenkerformelemente und Rechtslenkerformelemente an den Rückseiten der Winkelplatten sind als kreisförmige Zapfen ausgebildet.

Die in den Montageflächen (3, 4) für die Montage der Spiegelköpfe vorgesehenen Bohrungen (7) können beispielsweise mit Gewinden versehen sein, die ein Verschrauben mit den Spiegelköpfen ermöglichen.

In den Figuren 1, 2, 3 und 4 sind die Haltearme und Winkelplatten ungefähr in einer Ausrichtung abgebildet, die der hinsichtlich der Montage am Kraftfahrzeug beabsichtigten Ausrichtung entspricht. Somit sind die Haltearme im Wesentlichen parallel zu der z-Achse des Kraftfahrzeugs ausgerichtet.

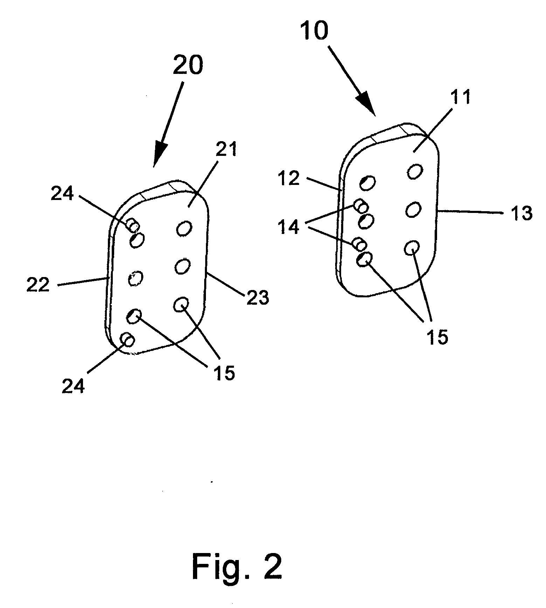

Fig. 2 zeigt eine vergrößerte Darstellung der Winkelplatten aus Fig. 1. Die Rechtslenkerwinkelplatte (10) und die Linkslenkerwinkelplatte (20) weisen jeweils eine Vorderseite (in Fig. 2 nicht sichtbar), eine Rückseite (11, 21), eine schmale Randseite (12, 22) und eine gegenüberliegend angeordnete breite Randseite (13, 23) auf. Die Winkelplatten sind dabei so abgebildet, dass die auf den Rückseiten (11, 21) der Winkelplatten ausgebildeten beiden Linkslenkerformelemente (24) bzw. Rechtslenkerformelemente (14) zu sehen sind. Diese Formelemente sind als kreisförmige Zapfen ausgebildet und so auf den Rückseiten (11, 21) angeordnet, dass sie in die zu den Linkslenkerformelementen komplementären ersten Formelementen (5) bzw. in die zu den Rechtslenkerformelementen komplementären zweiten Formelementen (6) eingreifen können. Die Winkelplatten verfügen ferner über sechs durchgehende Bohrungen (15) zur Montage der Spiegelköpfe. Diese durchgehenden Bohrungen (15) sind so angeordnet, dass sie nach der Montage der Winkelplatten auf den Montageflächen der Haltearme deckungsgleich mit den in den Montageflächen vorgesehenen Bohrungen (7) sind. Damit lässt sich der Spiegelkopf durch die Bohrungen (15) mit der Montageplatte am Haltearm verschrauben. Für eine Verwendung der in Fig. 2 dargestellten Winkelplatten für die in Fig. 1 abgebildeten Haltearme würden prinzipiell je drei durchgehende Bohrungen (15) in den Winkelplatten ausreichen, da die Montageflächen (3, 4) an den Haltearmen (1, 2) ebenfalls über lediglich 3 Bohrungen (7) verfügen. Durch Bereitstellen von mehreren Bohrungen (15) in den Winkelplatten, können diese auch für andere Haltearme verwendet werden, bei denen die Bohrungen für die Befestigung der Spiegelköpfe anders angeordnet sind.

In Fig. 3 ist eine perspektivische Darstellung eines Montagesystems gemäß der vorliegenden Erfindung mit an den Haltearmen montierten Spiegelköpfen (30, 31) dargestellt. Jeder der beiden Haltearme (1, 2) trägt zwei Spiegelköpfe übereinander, wobei der obere der Spiegelköpfe größer ist als der untere. In der in Fig. 3 abgebildeten speziellen Ausführungsform sind die rechten Spiegelköpfe (30) spiegelsymmetrisch zu den linken Spiegelköpfen (31), so dass für den rechten und linken Haltearm dieselben Spiegelköpfe verwendet werden können. Die in Fig. 3 abgebildeten Kraftfahrzeugaußenspiegel sind beispielsweise für Nutzfahrzeuge wie Lastkraftwagen oder Busse geeignet.

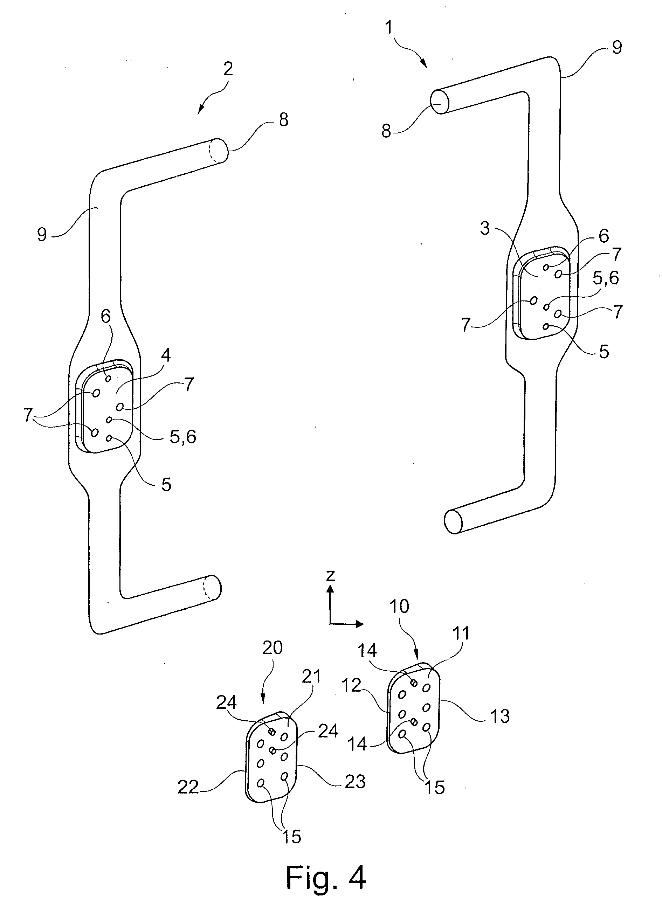

Fig. 4 zeigt eine perspektivische Darstellung einer weiteren Ausführungsform des erfindungsgemäßen Montagesystems. Bei dieser Ausführungsform weist jeder Haltearm nur eine Montagefläche auf und sind die beiden Haltearme spiegelsymmetrisch zueinander. Die Montageflächen an den beiden Haltearmen weisen drei Formelemente auf, von denen ein Formelement (5) komplementär zu einem der Linkslenkerformelemente (24) ist, ein Formelement (6) komplementär zu einem der Rechtslenkerformelemente (14) ist und ein Formelement (5, 6) komplementär zu sowohl einem der Linkslenkerformelemente (24) als auch einem der Rechtslenkerformelemente (14) ist.

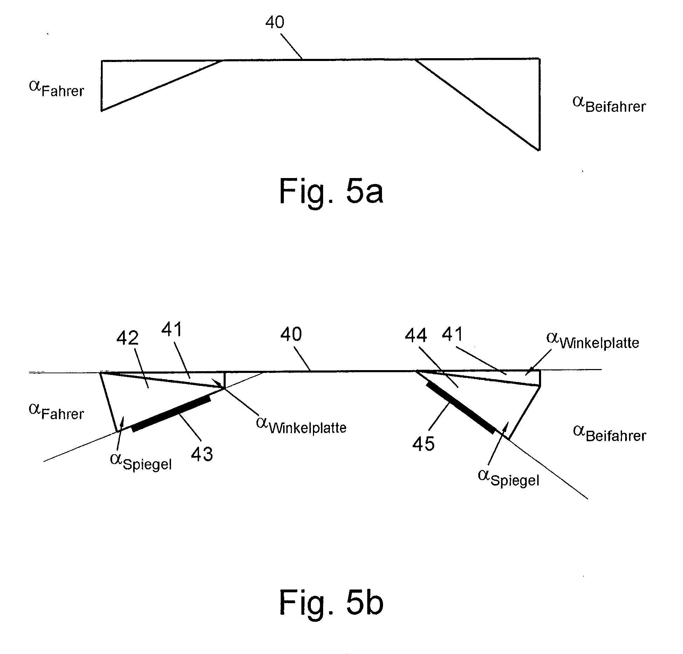

Die Figuren 5a und 5b sind schematische Skizzen, mit Hilfe derer nachfolgend erläutert wird, wie unter Verwendung identischer Winkelplatten die gewünschten Anstellwinkel für Fahrer- und Beifahrerspiegel eingestellt werden können.

Fig. 5a zeigt ausgehend von einer zur Fahrtrichtung des Fahrzeugs senkrechten Ebene (40) beispielhafte Anstellwinkel eines Spiegels auf der Fahrerseite $\alpha_{Fahrer}$ und eines Spiegels auf der Beifahrerseite $\alpha_{Beifahrer}$.

Der erforderliche Winkel der in der vorliegenden Erfindung verwendeten Winkelplatten (10, 20), d.h. der Winkel zwischen Vorderseite und Rückseite der Winkelplatte, errechnet sich aus dem Unterschied der Anstellwinkel der Spiegel der Fahrerseite und der Beifahrerseite und beträgt die Hälfte dieses Unterschieds. Ist beispielsweise ein Anstellwinkel für den Fahrerspiegel $\alpha_{Fahrer}$ von 16° und für den Beifahrerspiegel $\alpha_{Beifahrer}$ von 30° erforderlich so beträgt der Unterschied der Anstellwinkel 30° - 16° = 14° und ergibt sich daraus somit ein Winkel von 14° : 2 = 7° für die Winkelplatten (10, 20).

In Fig. 5b wird nun beispielhaft die Verwendung zweier identischer Winkelplatten zur Einstellung der gewünschten Anstellwinkel veranschaulicht. Der Einfachheit halber liegen die Montagefläche an denen die Winkelplatten montiert werden in der zur Fahrtrichtung senkrechten Ebene (40). Die Winkelplatten (41) werden so auf den Montageflächen angebracht, dass die Vorderseiten beider Winkelplatten in dieselbe Richtung um den Winkel $\alpha_{Winkelplatte}$ gegenüber der Montagefläche, d.h. der Ebene (40), verschwenkt sind. Auf beiden Winkelplatten werden identische Spiegelköpfe (42, 44) montiert, wobei der rechte Spiegelkopf (44) gegenüber dem linken Spiegelkopf (42) um 180° verdreht montiert ist. Beide Spiegelköpfe (42, 44) weisen somit denselben Winkel $\alpha_{Spiegel}$ auf, um den die Spiegelgläser (43, 45) gegenüber der Montagefläche der Spiegelköpfe (entspricht der Vorderseite der Winkelplatten (41)) verschwenkt sind. Dieser Winkel repräsentiert sozusagen den Anteil des Anstellwinkels, der durch den Spiegelkopf bereitgestellt wird.

Für den oben beispielhaft angegebenen Fall ergibt sich der Winkel $\alpha_{Spiegel}$ aus der Differenz zwischen $\alpha_{Beifahrer}$ und $\alpha_{Winkelplatte}$ und beträgt somit 30° - 7° = 23°.

Der Anstellwinkel für den Beifahrerspiegel $\alpha_{Beifahrer}$, d.h. die Verschwenkung des Spiegelglases (45) gegenüber der Ebene (40), errechnet sich somit aus

$$\alpha_{Beifahrer} = \alpha_{Spiegel} + \alpha_{Winkelplatte}$$

und beträgt 23° + 7° = 30°.

Der Anstellwinkel für den Fahrerspiegel $\alpha_{Fahrer}$, d.h. die Verschwenkung des Spiegelglases (43) gegenüber der Ebene (40), errechnet sich demgemäß aus

$$\alpha_{Fahrer} = \alpha_{Spiegel} - \alpha_{Winkelplatte}$$

und beträgt 23° - 7° = 16°.

Die Figuren 5a und 5b und die diesbezüglich oben gegebenen Erläuterungen beziehen sich auf ein linksgelenktes Fahrzeug. Die Situation bei einem rechtsgelenkten Fahrzeug ist spiegelbildlich. Das heißt, die Winkelplatten (41) werden so an den Montageflächen der Haltearme angebracht, dass die Vorderseiten der Winkelplatten (41) gegenüber den Montageflächen nach rechts verschwenkt sind.

**Bezugszeichenliste:**

| | |
|---|---|
| 1 | Rechter Haltearm |
| 2 | Linker Haltearm |
| 3 | Montagefläche des rechten Haltearms |
| 4 | Montagefläche des linken Haltearms |
| 5 | Zu einem Linkslenkerformelement komplementäres erstes Formelement |
| 6 | Zu einem Rechtslenkerformelement komplementäres zweites Formelement |
| 7 | Bohrung zur Montage eines Spiegelkopfes |
| 8 | Innenseite der Haltearme |
| 9 | Außenseite der Haltearme |
| 10 | Rechtslenkerwinkelplatte |
| 11 | Rückseite der Rechtslenkerwinkelplatte |
| 12 | Schmale Randseite der Rechtslenkerwinkelplatte |
| 13 | Breite Randseite der Rechtslenkerwinkelplatte |
| 14 | Rechtslenkerformelement |
| 15 | Durchgehende Bohrung zur Montage eines Spiegelkopfes |
| 20 | Linkslenkerwinkelplatte |
| 21 | Rückseite der Linkslenkerwinkelplatte |
| 22 | Schmale Randseite der Linkslenkerwinkelplatte |
| 23 | Breite Randseite der Linkslenkerwinkelplatte |

| 24 | Linkslenkerformelement |
|---|---|
| 30 | Rechter Spiegelkopf |
| 31 | Linker Spiegelkopf |
| 40 | Ebene senkrecht zur Fahrtrichtung des Fahrzeugs |
| 41 | Winkelplatten |
| 42 | Linker Spiegelkopf |
| 43 | Spiegelglas des linken Spiegelkopfs |
| 44 | Rechter Spiegelkopf |
| 45 | Spiegelglas des rechten Spiegelkopfs |
| z | Zur z-Achse des Fahrzeugs parallele Hochachse |
| $\alpha_{Fahrer}$ | Anstellwinkel des Fahrerspiegels |
| $\alpha_{Beifahrer}$ | Anstellwinkel des Beifahrerspiegels |
| $\alpha_{Winkelplatte}$ | Winkel der Winkelplatte |
| $\alpha_{Spiegel}$ | Anstellwinkel, der durch den Spiegelkopf bereitgestellt wird |

**Patentansprüche**

1. Montagesystem zur Montage von Spiegelköpfen zur Bereitstellung von rechten und linken Kraftfahrzeugaußenspiegeln, mit
einem rechten Haltearm (1) und einem linken Haltearm (2), die jeweils wenigstens eine Montagefläche (3, 4) umfassen,
wenigstens zwei identischen Linkslenkerwinkelplatten (20) und/oder wenigstens zwei identischen Rechtslenkerwinkelplatten (10), die jeweils eine Vorderseite, eine Rückseite (11, 21) eine schmale Randseite (12, 22) und eine gegenüberliegend angeordnete breite Randseite (13, 23) umfassen und mittels ihren Rückseiten (11, 21) an den Montageflächen (3, 4) der beiden Haltearme (1, 2) montierbar sind und an deren Vorderseiten die Spiegelköpfe (30, 31) montierbar sind,
**dadurch gekennzeichnet, dass** jede Linkslenkerwinkelplatte (20) eine Linkslenkerkodierung in Form von wenigstens einem Linkslenkerformelement (24) aufweist, das bei Montage an der Montagefläche (3, 4) in wenigstens ein komplementäres erstes Formelement (5) auf der Montagefläche (3, 4) eingreift, und die Linkslenkerkodierung eine Montage der Linkslenkerwinkelplatte (20) an den Montageflächen (3, 4) des rechten und linken Haltearm (1, 2) in nur einer Linkslenkerorientierung ermöglicht,
bzw. jede Rechtslenkerwinkelplatte (10) eine Rechtslenkerkodierung in Form von wenigstens einem Rechtslenkerformelement (14) aufweist, das bei Montage an der Montagefläche (3, 4) in wenigstes ein komplementäres zweites Formelement (6) auf der Montagefläche (3, 4) eingreift, und die Rechtslenkerkodierung eine Montage der Rechtslenkerwinkelplatte (10) an den Montageflächen (3, 4) des rechten und linken Haltearms (1, 2) in nur einer Rechtslenkerorientierung ermöglicht.

2. Halteinrichtung für einen linken Kraftfahrzeugaußenspiegel eines Linkslenkerfahrzeuges, mit
einem linken Haltearm (2), der wenigstens ein e Montagefläche (4) umfasst,
wenigstens einer Linkslenkerwinkelplatte (20), die eine Vorderseite, eine Rückseite (21) eine schmale Randseite (22) und eine gegenüberliegend angeordnete breite Randseite (23) umfasst und mittels ihrer Rückseite (21) an der Montagefläche (4) des Haltearms montiert ist und an deren Vorderseite ein Spiegelkopf (31) montierbar ist,
**dadurch gekennzeichnet, dass**
die Linkslenkerwinkelplatte (20) eine Linkslenkerkodierung in Form von wenigstens einem Linkslenkerformelement (24) aufweist, das in wenigstens ein komplementäres Formelement (5) auf der Montagefläche (4) eingreift, und die Linkslenkerkodierung eine Montage der Linkslenkerwinkelplatte (20) an der Montagefläche (4) des linken Haltearms (2) in nur einer Linkslenkerorientierung ermöglicht.

3. Halteinrichtung für einen rechten Kraftfahrzeugaußenspiegel eines Linkslenkerfahrzeuges, mit
einem rechten Haltearm (1), d er wenigstens eine Montagefläche (3) umfasst, wenigstens einer Linkslenkerwinkelplatte (20), die eine Vorderseite, eine Rückseite (21) eine schmale Randseite (22) und eine gegenüberliegend angeordnete breite Randseite (23) umfasst und mittels ihrer Rückseite (21) an der Montagefläche (3) des rechten Haltearms (1) montiert ist und an deren Vorderseite ein Spiegelkopf montierbar (30) ist,
**dadurch gekennzeichnet, dass**
die Linkslenkerwinkelplatte (20) eine Linkslenkerkodierung in Form von wenigstens einem Linkslenkerformelement (24) aufweist, das in wenigstens ein komplementäres Formelement (5) auf der Montagefläche (3) eingreift, und die Linkslenkerkodierung eine Montage der Linkslenkerwinkelplatte (20) an der Montagefläche (3) des rechten Haltearms (1) in nur einer Linkslenkerorientierung ermöglicht.

4. Halteinrichtung für einen linken Kraftfahrzeugaußenspiegel eines Rechtslenkerfahrzeuges, mit
einem linken Haltearm (2), der wenigstens ein e Montagefläche (4) umfasst, wenigstens einer Rechtslenkerwinkelplatte (10), die eine Vorderseite, eine Rückseite (11) eine schmale Randseite (12) und eine gegenüberliegend angeordnete breite Randseite (13) umfasst und mittels ihrer Rückseite (11) an der Montagefläche (4) des linken Haltearms (2) montiert ist und an deren Vorderseite ein Spiegelkopf (31) montierbar ist,
**dadurch gekennzeichnet, dass**
die Rechtslenkerwinkelplatte (10) eine Rechtslenkerkodierung mit wenigstens einem Rechtslenkerformelement (14) aufweist, das in wenigstens ein komplementäres Formelement (6) an der Montagefläche (4) eingreift, und die Rechtslenkerkodierung eine Montage der Rechtslenkerwinkelplatte (10) an der Montagefläche (4) des linken Haltearms (2) in nur einer Rechtslenkerorientierung ermöglicht.

5. Halteinrichtung für einen rechten Kraftfahrzeugaußenspiegel eines Rechtslenkerfahrzeuges, mit einem rechten Haltearm (1),d er wenigstens eine Montagefläche (3) umfasst,
wenigstens einer Rechtslenkerwinkelplatte (10), die eine Vorderseite, eine Rückseite (11) eine schmale Randseite (12) und eine gegenüberliegend angeordnete breite Randseite (13) umfasst und mittels ihrer Rückseite (11) an der Montagefläche (3) des rechten Haltearms (1) montiert ist und an deren Vorderseite ein Spiegelkopf (30) montierbar ist,
**dadurch gekennzeichnet, dass**
die Rechtslenkerwinkelplatte (10) eine Rechtslenkerkodierung mit wenigstens einem Rechtslenkerformelement (14) aufweist, das in wenigstens ein komplementäres Formelement (6) auf der Montagefläche (3) eingreift, und die Rechtslenkerkodierung eine Montage der Rechtslenkerwinkelplatte (10) an der Montagefläche (3) des rechten Haltearms (1) in nur einer Rechtslenkerorientierung ermöglicht.

6. Montagesystem oder Halteeinrichtung nach einem der vorhergehenden Ansprüche, **dadurch gekennzeichnet,**
**dass** die Haltearme (1, 2) jeweils eine dem Fahrzeug zugewandte Innenseite (8) und eine von dem Fahrzeug abgewandte Außenseite (9) aufweisen, wobei die wenigstens eine Montagefläche (3, 4) zwischen Innen- und Außenseite angeordnet ist, und
**dass** die Linkslenkerorientierung der Linkslenkerwinkelplatte (20) bei deren Montage an einem rechten Haltearm (1) derart ist, dass die breite Randseite (23) der Linkslenkerwinkelplatte (20) der Außenseite (9) des rechten Haltearms (1) zugewandt ist, und dass die Linkslenkerorientierung der Linkslenkerwinkelplatte (20) bei deren Montage an einem linken Haltearm (2) derart ist, dass die breite Randseite (23) der Innenseite (8) des linken Haltearms (2) zugewandt ist, bzw.
**dass** die Rechtslenkerorientierung der Rechtslenkerwinkelplatte (10) bei deren Montage an einem rechten Haltearm (1) derart ist, dass die schmale Randseite (12) der Rechtslenkerwinkelplatte der Außenseite (9) des rechten Haltearms (1) zugewandt ist, und dass die Rechtslenkerorientierung der Rechtslenkerwinkelplatte (10) bei deren Montage an einem linken Haltearm (2) derart ist, dass die schmale Randseite (12) der Innenseite (8) des linken Haltearms (2) zugewandt ist.

7. Montagesystem oder Halteeinrichtung nach einem der Ansprüche 1 bis 5, **dadurch gekennzeichnet, dass** bei einer in Bezug auf die hinsichtlich der Montage am Kraftfahrzeug beabsichtigten Ausrichtung der Haltearme (1, 2) die Vorderseitenflächen der Winkelplatten (10, 20) gegenüber den Montageflächen (3, 4) der Haltearme (1, 2) um eine senkrechte Hochachse, die zur z-Achse des Fahrzeugs parallel ist, verdreht ausgerichtet sind,
wobei bei der Linkslenkerorientierung die Vorderseitenflächen der Linkslenkerwinkelplatten (20) negativ um die senkrechte Hochachse verdreht sind, und bei der Rechtslenkerorientierung die Vorderseitenflächen der Rechtslenkerwinkelplatten (10) positiv um die senkrechte Hochachse verdreht sind.

8. Montagesystem oder Halteeinrichtung nach einem der vorhergehenden Ansprüche, **dadurch gekennzeichnet, dass** eine Mehrzahl von Rechtslenkerformelementen (14) bzw. Linkslenkerformelementen (24) an den Rechtslenkerwinkelplatten (10) bzw. Linkslenkerwinkelplatten (20) und eine entsprechende Mehrzahl zugehöriger komplementärer Formelemente (5, 6) auf den Montageflächen (3, 4) der Haltearme (1, 2) vorgesehen ist.

9. Montagesystem oder Halteeinrichtung nach einem der vorhergehenden Ansprüche, **dadurch gekennzeichnet, dass** die Rechtslenkerformelemente bzw. Linkslenkerformelemente an den Rechtslenkerwinkelplatten bzw. Linkslenkerwinkelplatten Stege und/oder Nuten und die komplementären Formelemente auf den Montageflächen der Haltearme Nuten und/oder Stege sind.

10. Montagesystem oder Halteeinrichtung nach einem der vorhergehenden Ansprüche, **dadurch gekennzeichnet, dass** der linke und der rechte Haltearm spiegelsymmetrisch zueinander sind.

11. Montagesystem oder Halteeinrichtung nach einem der vorhergehenden Ansprüche, **dadurch gekennzeichnet, dass** die Winkelplatten (10, 20) durchgehende Bohrungen (15) für die Montage der Spiegelköpfe an den Haltearmen (1, 2) umfassen und dass diese Bohrungen (15) symmetrisch angeordnet sind.

12. Kraftfahrzeugaußenspiegel für Nutzfahrzeuge mit einer Halteeinrichtung nach einem der vorhergehenden Ansprüche 2 bis 11 und wenigstens einem an der Halteeinrichtung montierten Spiegelkopf (30, 31).

**Claims**

1. A mounting system for mounting mirror heads to provide right and left automotive exterior rear view mirrors, comprising
   a right retaining arm (1) and a left retaining arm (2) each having at least one mounting surface (3, 4),
   at least two identical left-hand drive angle plates (20) and/or at least two identical right-hand drive angle plates (10) each having a front side, a rear side (11, 21), a narrow rim side (12, 22) and an oppositely arranged wide rim side (13, 23), which are adapted to be mounted to the mounting surfaces (3, 4) of the two retaining arms (1, 2) by their rear sides (11, 21), and to the front sides of which the mirror heads (30, 31) may be mounted,
   **characterized in that** each left-hand drive angle plate (20) presents a left-hand drive coding having the form of at least one left-hand drive shape element (24) which engages at least one complementary first shape element (5) on the mounting surface (3, 4) during mounting to the mounting surface (3, 4), and the left-hand drive coding admits mounting of the left-hand drive angle plate (20) to the mounting surfaces (3, 4) of the right and left retaining arm (1, 2) in a left-hand drive orientation only,
   or each right-hand drive angle plate (10) presents a right-hand drive coding having the form of at least one right-hand drive shape element (14) which engages at least one complementary second shape element (6) on the mounting surface (3, 4) during mounting to the mounting surface (3, 4), and the right-hand drive coding admits mounting of the right-hand drive angle plate (10) to the mounting surfaces (3, 4) of the right and left retaining arm (1, 2) in a right-hand drive orientation only.

2. A retaining means for a left automotive exterior rear view mirror of a left-hand drive vehicle, comprising
   a left retaining arm (2) having at least one mounting surface (4),
   at least one left-hand drive angle plate (20) having a front side, a rear side (21), a narrow rim side (22) and an oppositely arranged wide rim side (23), which is mounted to the mounting surface (4) of the retaining arm by its rear side (21), and to the front side of which a mirror head (31) may be mounted,
   **characterized in that**
   the left-hand drive angle plate (20) presents a left-hand drive coding having the form of at least one left-hand drive shape element (24) which engages at least one complementary shape element (5) on the mounting surface (4), and the left-hand drive coding admits mounting of the left-hand drive angle plate (20) to the mounting surface (4) of the left retaining arm (2) in a left-hand drive orientation only.

3. A retaining means for a right automotive exterior rear view mirror of a left-hand drive vehicle, comprising
   a right retaining arm (1) having at least one mounting surface (3),
   at least one left-hand drive angle plate (20) having a front side, a rear side (21), a narrow rim side (22) and an oppositely arranged wide rim side (23), which is mounted to the mounting surface (3) of the right retaining arm (1) by its rear side (21), and to the front side of which a mirror head (30) may be mounted,
   **characterized in that**
   the left-hand drive angle plate (20) presents a left-hand drive coding having the form of at least one left-hand drive shape element (24) which engages at least one complementary shape element (5) on the mounting surface (3), and the left-hand drive coding admits mounting of the left-hand drive angle plate (20) to the mounting surface (3) of the right retaining arm (1) in a left-hand drive orientation only.

4. A retaining means for a left automotive exterior rear view mirror of a right-hand drive vehicle, comprising
   a left retaining arm (2) having at least one mounting surface (4),
   at least one right-hand drive angle plate (10) having a front side, a rear side (11), a narrow rim side (12) and an oppositely arranged wide rim side (13), which is mounted to the mounting surface (4) of the left retaining arm (2) by its rear side (11), and to the front side of which a mirror head (31) may be mounted,
   **characterized in that**
   the right-hand drive angle plate (10) presents a right-hand drive coding including at least one right-hand drive shape element (14) which engages at least one complementary shape element (6) on the mounting surface (4), and the right-hand drive coding admits mounting of the right-hand drive angle plate (10) to the mounting surface (4) of the left retaining arm (2) in a right-hand drive orientation only.

5. A retaining means for a right automotive exterior rear view mirror of a right-hand drive vehicle, comprising
   a right retaining arm (1) having at least one mounting surface (3),
   at least one right-hand drive angle plate (10) having a front side, a rear side (11), a narrow rim side (12) and an oppositely arranged wide rim side (13), which is mounted to the mounting surface (3) of the right retaining arm (1) by its rear side (11), and to the front side of which a mirror head (30) may be mounted,
   **characterized in that**
   the right-hand drive angle plate (10) presents a right-hand drive coding including at least one right-hand drive shape element (14) which engages at least one complementary shape element (6) on the mounting surface (3), and the right-hand drive coding admits mounting of the right-hand drive angle plate (10) to the mounting surface (3) of the right retaining arm (1) in a right-hand drive orientation only.

6. The mounting system or retaining means according to any one of the preceding claims, **characterized in that**
the retaining arms (1, 2) each have an inner side (8) facing the vehicle and an outer side (9) facing away from the vehicle, wherein the at least one mounting surface (3, 4) is disposed between the inner and outer sides, and
the left-hand drive orientation of the left-hand drive angle plate (20) being mounted to a right retaining arm (1) is such that the wide rim side (23) of left-hand drive angle plate (20) faces the outer side (9) of the right retaining arm (1), and the left-hand drive orientation of the left-hand drive angle plate (20) being mounted to a left retaining arm (2) is such that the wide rim side (23) faces the inner side (8) of the left retaining arm (2), or
the right-hand drive orientation of the right-hand drive angle plate (10) being mounted to a right retaining arm (1) is such that the narrow rim side (12) of the right-hand drive angle plate faces the outer side (9) of the right retaining arm (1), and the right-hand drive orientation of the right-hand drive angle plate (10) being mounted to a left retaining arm (2) is such that the narrow rim side (12) faces the inner side (8) of the left retaining arm (2).

7. The mounting system or retaining means according to any one of claims 1 to 5, **characterized in that** at an orientation of the retaining arms (1, 2) that is intended with a view to mounting to the automotive vehicle, the front side faces of the angle plates (10, 20) have an orientation rotated, relative to the mounting surfaces (3, 4) of the retaining arms (1, 2), about a vertical height axis which is parallel to the z-axis of the vehicle,
wherein in the left-hand drive orientation the front side faces of the left-hand drive angle plates (20) are rotated negatively about the vertical height axis, and in the right-hand drive orientation the front side faces of the right-hand drive angle plates (10) are rotated positively about the vertical height axis.

8. The mounting system or retaining means according to any one of the preceding claims, **characterized in that** a plurality of right-hand drive shape elements (14) or left-hand drive shape elements (24) are provided on the right-hand drive angle plates (10) or left-hand drive angle plates (20), and a corresponding plurality of associated complementary shape elements (5, 6) are provided on the mounting surfaces (3, 4) of the retaining arms (1, 2).

9. The mounting system or retaining means according to any one of the preceding claims, **characterized in that** the right-hand drive shape elements or left-hand drive shape elements on the respective right-hand drive angle plates or left-hand drive angle plates are webs and/or grooves, and the complementary shape elements on the mounting surfaces of the retaining arms are grooves and/or webs.

10. The mounting system or retaining means according to any one of the preceding claims, **characterized in that** the left and the right retaining arm are mirror-symmetrical.

11. The mounting system or retaining means according to any one of the preceding claims, **characterized in that** the angle plates (10, 20) include through bores (15) for mounting of the mirror heads to the retaining arms (1, 2), and **in that** these bores (15) are arranged symmetrically.

12. Automotive exterior rear view mirrors for utility vehicles, comprising a retaining means according to any one of the preceding claims 2 to 11 and at least one mirror head (30, 31) mounted to the retaining means.

**Revendications**

1. Système de montage pour le montage de pieds de rétroviseur pour la préparation de rétroviseurs extérieurs de véhicule droits et gauches, avec
un bras de maintien droit (1) et un bras de maintien gauche (2) comprenant chacun au moins une surface de montage (3, 4),
au moins deux plaques angulaires pour direction à gauche (20) identiques et/ou au moins deux plaques angulaires pour direction à droite (10) identiques, lesquelles comportent chacune une face avant, une face arrière (11, 21), une face latérale étroite (12, 22) et une face latérale large (13, 23) opposée, et peuvent être montées par leurs faces arrière (11, 21) sur les surfaces de montage (3, 4) des deux bras de maintien (1, 2), et sur les faces avant desquelles les pieds de rétroviseur (30, 31) peuvent être montés,
**caractérisé en ce que**
chaque plaque angulaire pour direction à gauche (20) présente un codage pour direction à gauche sous la forme d'au moins un élément formé pour direction à gauche (24), qui au montage sur la surface de montage (3, 4) s'engage dans au moins un premier élément formé complémentaire (5) sur la surface de montage (3, 4), le codage pour direction à gauche ne permettant un montage de la plaque angulaire pour direction à gauche (20) sur les surfaces de montage (3, 4) des bras de maintien droit et gauche (1, 2) que suivant une orientation pour direction à gauche,

ou que chaque plaque angulaire pour direction à droite (10) présente un codage pour direction à droite sous la forme d'au moins un élément formé pour direction à droite (14), qui au montage sur la surface de montage (3, 4) s'engage dans au moins un deuxième élément formé complémentaire (6) sur la surface de montage (3, 4), le codage pour direction à droite ne permettant un montage de la plaque angulaire pour direction à droite (10) sur les surfaces de montage (3, 4) des bras de maintien droit et gauche (1, 2) que suivant une orientation pour direction à droite.

2.   Dispositif de maintien pour un rétroviseur extérieur gauche d'un véhicule à direction à gauche, avec un bras de maintien gauche (2) comprenant au moins une surface de montage (4), au moins une plaque angulaire pour direction à gauche (20) comportant une face avant, une face arrière (21) une face latérale étroite (22) et une face latérale large (23) opposée, et qui est montée par sa face arrière (21) sur la surface de montage (4) du bras de maintien, et sur la face avant de laquelle un pied de rétroviseur (31) peut être monté,
**caractérisé en ce que**
la plaque angulaire pour direction à gauche (20) présente un codage pour direction à gauche sous la forme d'au moins un élément formé pour direction à gauche (24), lequel s'engage dans au moins un élément formé complémentaire (5) sur la surface de montage (4), et **en ce que** le codage pour direction à gauche ne permet un montage de la plaque angulaire pour direction à gauche (20) sur la surface de montage (4) du bras de maintien gauche (2) que suivant une orientation pour direction à gauche.

3.   Dispositif de maintien pour un rétroviseur extérieur droit d'un véhicule à direction à gauche, avec un bras de maintien droit (1) comprenant au moins une surface de montage (3), au moins une plaque angulaire pour direction à gauche (20) comportant une face avant, une face arrière (21) une face latérale étroite (22) et une face latérale large (23) opposée, et qui est montée par sa face arrière (21) sur la surface de montage (3) du bras de maintien droit (1), et sur la face avant de laquelle un pied de rétroviseur (30) peut être monté,
**caractérisé en ce que**
la plaque angulaire pour direction à gauche (20) présente un codage pour direction à gauche sous la forme d'au moins un élément formé pour direction à gauche (24), lequel s'engage dans au moins un élément formé complémentaire (5) sur la surface de montage (3), et **en ce que** le codage pour direction à gauche ne permet un montage de la plaque angulaire pour direction à gauche (20) sur la surface de montage (3) du bras de maintien droit (1) que suivant une orientation pour direction à gauche.

4.   Dispositif de maintien pour un rétroviseur extérieur gauche d'un véhicule à direction à droite, avec un bras de maintien gauche (2) comprenant au moins une surface de montage (4), au moins une plaque angulaire pour direction à droite (10) comportant une face avant, une face arrière (11) une face latérale étroite (12) et une face latérale large (13) opposée, et qui est montée par sa face arrière (11) sur la surface de montage (4) du bras de maintien gauche (2), et sur la face avant de laquelle un pied de rétroviseur (31) peut être monté,
**caractérisé en ce que**
la plaque angulaire pour direction à droite (10) présente un codage pour direction à droite avec au moins un élément formé pour direction à droite (14), lequel s'engage dans au moins un élément formé complémentaire (6) sur la surface de montage (4), et **en ce que** le codage pour direction à droite ne permet un montage de la plaque angulaire pour direction à droite (10) sur la surface de montage (4) du bras de maintien gauche (2) que suivant une orientation pour direction à droite.

5.   Dispositif de maintien pour un rétroviseur extérieur droit d'un véhicule à direction à droite, avec un bras de maintien droit (1) comprenant au moins une surface de montage (3), au moins une plaque angulaire pour direction à droite (10) comportant une face avant, une face arrière (11) une face latérale étroite (12) et une face latérale large (13) opposée, et qui est montée par sa face arrière (11) sur la surface de montage (3) du bras de maintien droit (1), et sur la face avant de laquelle un pied de rétroviseur (30) peut être monté,
**caractérisé en ce que**
la plaque angulaire pour direction à droite (10) présente un codage pour direction à droite sous la forme d'au moins un élément formé pour direction à droite (14), lequel s'engage dans au moins un élément formé complémentaire (6) sur la surface de montage (3), et **en ce que** le codage pour direction à droite ne permet un montage de la plaque angulaire pour direction à droite (10) sur la surface de montage (3) du bras de maintien droit (1) que suivant une orientation pour direction à droite.

6.   Système de montage ou dispositif de maintien selon l'une des revendications précédentes,
**caractérisé en ce que**
les bras de maintien (1, 2) comportent chacun un côté intérieur (8) opposé au véhicule et un côté extérieur (9) distant du véhicule, la ou les surfaces de montage (3, 4) étant situées entre le côté intérieur et le côté extérieur, et
**en ce que** l'orientation pour direction à gauche de la plaque angulaire pour direction à gauche (20) est telle pour son montage sur un bras de maintien droit (1), que la face latérale large (23) de la plaque angulaire pour direction à gauche (20) est opposée au côté extérieur (9) du bras de maintien droit (1), et que l'orientation pour direction à gauche de la plaque angulaire pour direction à gauche (20) est telle pour son montage sur un bras de maintien gauche (2), que la face latérale large (23) du côté intérieur (8) est opposé au bras de maintien gauche (2), ou **en ce que** l'orientation pour direction à droite de la plaque angulaire pour direction à droite (10) est telle pour son montage sur un bras de maintien droit (1), que la face latérale étroite (12) de la plaque angulaire pour direction à droite du côté extérieur (9) est opposée au bras de maintien droit (1), et **en ce que** l'orientation pour direction à droite de la plaque angulaire pour direction à droite (10) est telle pour son montage sur un bras de maintien gauche (2), que la face latérale étroite (12) du côté intérieur (8) est opposée au bras de maintien gauche (2).

7. Système de montage ou dispositif de maintien selon l'une des revendications 1 à 5, **caractérisé en ce que** pour une orientation des bras de maintien (1, 2) envisagée relativement au montage sur le véhicule, les surfaces de face avant des plaques angulaires (10, 20) sont orientées en étant pivotées par rapport aux surfaces de montage (3, 4) des bras de maintien (1, 2) autour d'un axe vertical parallèle à l'axe z du véhicule,
les surfaces de face avant des plaques angulaires pour direction à gauche (20) étant pivotées négativement autour de l'axe vertical pour une orientation pour direction à gauche, et les surfaces de face avant des plaques angulaires pour direction à droite (10) étant pivotées positivement autour de l'axe vertical pour une orientation pour direction à droite.

8. Système de montage ou dispositif de maintien selon l'une des revendications précédentes, **caractérisé en ce qu'**une pluralité d'éléments formés pour direction à droite (14) ou d'éléments formés pour direction à gauche (24) est prévue sur les plaques angulaires pour direction à droite (10) ou les plaques angulaires pour direction à gauche (20), et une pluralité correspondante d'éléments formés complémentaires (5, 6) associés est prévue sur les surfaces de montage (3, 4) des bras de maintien (1, 2).

9. Système de montage ou dispositif de maintien selon l'une des revendications précédentes, **caractérisé en ce que** les éléments formés pour direction à droite ou les éléments formés pour direction à gauche sur les plaques angulaires pour direction à droite ou les plaques angulaires pour direction à gauche sont des nervures et/ou des rainures, et les éléments formés complémentaires sur les surfaces de montage des bras de maintien sont des rainures et/ou des nervures.

10. Système de montage ou dispositif de maintien selon l'une des revendications précédentes, **caractérisé en ce que** le bras de maintien gauche et le bras de maintien droite sont symétriques bilatéralement l'un par rapport à l'autre.

11. Système de montage ou dispositif de maintien selon l'une des revendications précédentes, **caractérisé en ce que** les plaques angulaires (10, 20) comprennent des alésages traversants (15) pour le montage des pieds de rétroviseur sur les bras de maintien (1, 2), et **en ce que** lesdits alésages (15) sont disposés symétriquement.

12. Rétroviseur extérieur pour véhicules utilitaires avec un dispositif de maintien selon l'une des revendications 2 à 11 et au moins un pied de rétroviseur (30, 31) monté sur le dispositif de maintien.

Fig. 1

Fig. 2

Fig. 3

# Fig. 4

$\alpha_{Fahrer}$

40

$\alpha_{Beifahrer}$

Fig. 5a

42  41

40

44  41

$\alpha_{Winkelplatte}$

$\alpha_{Fahrer}$

$\alpha_{Winkelplatte}$

$\alpha_{Spiegel}$  43

45

$\alpha_{Beifahrer}$

$\alpha_{Spiegel}$

Fig. 5b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 29504245 U1
- EP 1531084 A2
- WO 0214923 A